# EUROPÄISCHE PATENTSCHRIFT

(11) **EP 2 668 695 B1**
(45) Veröffentlichungstag und Bekanntmachung des Hinweises auf die Patenterteilung: **29.11.2017**
(21) Anmeldenummer: 11804964.2
(22) Anmeldetag: 23.12.2011
(51) Int. Cl.: H01Q 1/42, H01Q 1/44, H01Q 1/32

(54) **RADARTRANSPARENTE BESCHICHTUNG**
RADAR-TRANSPARENT COATING
REVÊTEMENT TRANSPARENT AUX ONDES RADAR

(30) Priorität: 27.01.2011 US 201161436665 P; 11.04.2011 DE 102011016683
(43) Veröffentlichungstag der Anmeldung: 04.12.2013
(73) Patentinhaber: Oerlikon Surface Solutions AG, Pfäffikon, 8808 Pfäffikon (CH)
(72) Erfinder: KECKES, Antal, 78244 Gottmadingen (DE); SCHULER, Peter, 72202 Nagold (DE); RIBEIRO, Carlos, Saigon (VN)
(74) Vertreter: Kempkens, Anke
(86) Internationale Anmeldenummer: PCT/EP2011/006545
(87) Internationale Veröffentlichungsnummer: WO 2012/100805

(56) Entgegenhaltungen:
- WO-A1-2010/084733
- DE-A1-102009 025 950
- US-A- 5 273 815
- US-A- 5 373 306
- US-A- 5 608 414
- US-A1- 2010 272 932

## Beschreibung

Die vorliegende Erfindung betrifft ein hinter einer Verkleidung angeordnetes Radargerät, wobei zumindest Teile der Verkleidung im Strahlengang des Radargerätes liegen. Mit Radargerät kann beispielsweise eine Radar- Strahlungsquelle, ein Sensor für Radarstrahlen oder die Kombination aus beidem gemeint sein.

Radargeräte werden beispielsweise in Kraftfahrzeugen zur Abstandsmessung verwendet. Oftmals ist ein solches Gerät hinter dem Frontgrill des Kraftfahrzeuges angeordnet. Von aussen soll das entsprechende Radargerät nicht sichtbar sein und muss daher hinter einer Verkleidung angeordnet werden. Die für diese Anwendungen relevanten Radarstrahlen liegen vorzugsweise im Frequenzbereich um 76-77GHz. Die Verkleidung soll einerseits für Radarstrahlen in diesem Frequenzbereich weitgehend durchlässig sein, andererseits von aussen aber einen gewünschten optischen Eindruck hinterlassen. Insbesondere ist oftmals ein metallisches Aussehen gewünscht.

In der DE 198 44 021 wird ein innerhalb des Strahlenganges eines Radargerätes liegendes Verkleidungsteil aus Kunststoff mit von aussen sichtbaren Teilbereich aus Metall offenbart, wobei der Teilbereich aus Metall von einer extrem dünnen, d.h. etwa 40nm dick aufgedampften Metallschicht, gebildet wird. Diese Schicht entspricht gemäss der dortigen Beschreibung optisch den dort aufgeführten angrenzenden Chromzierleisten.

Mit der in der DE 198 44 021 offenbarten Anordnung ist zwar ein optisch metallischer Eindruck zu erzielen. Aufgrund der metallischen Eigenschaften der Schicht wird aber trotz der geringen Schichtdicken ein nicht zu vernachlässigender Anteil der Radarstrahlung weiterhin absorbiert und steht nicht mehr als Signal zur Verfügung. Ausserdem erlaubt die Verwendung von Metallschichten im Wesentlichen keine Anpassungen hinsichtlich des optischen Eindrucks. Dieser kann also nicht, oder nur in sehr engem Rahmen, variiert werden.

WO2010/084733A1 offenbart ein radiowellentransparentes Bauteil, welches aus einem Substrat, und einer Haftschicht zu einer darauf aufgebrachten Lichtreflexionsschicht aus einer Silizium- oder Germanium-Metalllegierung, sowie darauf einem transparenten organischen Körper als Schutz gegen die Umgebung, aufgebaut sein kann.

DE102009025950A1 offenbart ein radartransparentes Substrat mit einer Reflexion verstärkenden Schicht welche auf das Substrat aufgeklebt ist, darauf einer Germanium- bzw. Germaniumlegierungsschicht, darauf einer aufgeklebten Verfärbungs-/Klebeschicht, sowie darauf einer aufgeklebten Schutzschicht.

US2010/0272932A1 offenbart ein radartransparentes Substrat, mit einer Haftschicht aus einem Harz zwischen Substrat und einer Halbleiter- oder Halbmetallschicht, sowie darauf einer einfärbbaren Haftschicht zu einer darauf aufgebrachten Schutzschicht aus einem harten, durchlässigen Material.

Es ist daher die Aufgabe der vorliegenden Erfindung die oben geschilderten Probleme des Stand der Technik zu überwinden oder zumindest abzuschwächen.

Erfindungsgemäss wird die Aufgabe wie in den Ansprüchen definiert gelöst. Im Rahmen dieser Beschreibung ist Halbleiterschicht und zumindest einen Halbleiter umfassende Schicht gleichzusetzen.

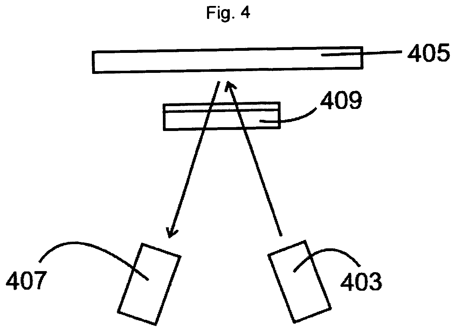

Im Rahmen dieser Beschreibung gilt ein Bauteil als radartransparentes Bauteil wenn bei zweimaligem Durchgang von Radarstrahlen durch das Bauteil beim Sensor noch wenigsten 0.1% der Intensität I ankommt, relativ zu der Intensität I₀ welche sonst ohne Durchgang durch das Bauteil beim Sensor ankommt. Vorzugsweise kommen wenigstens 1% an I/I₀ = 1%, besonders bevorzugt 5% oder mehr. Figur 4 skizziert einen Messaufbau mit Radarquelle 403, Reflexionsgegenstand 405, Radarsensor 407 und zu vermessendes Bauteil 409. Der Strahlengang ist durch Pfeile angedeutet. Die Referenzmessung der Intensität I₀ wird ohne Bauteil 405 durchgeführt. Die Transmissionsmessung der Intensität I wird mit Bauteil 405 durchgeführt.

Die Erfindung wird nun im Detail anhand von Beispielen und den Figuren genauer erläutert.
Figur 1 zeigt ein Bauteil 101 mit einem radartransparenten Körper 103 und einer ein Halbleitermaterial umfassenden Schicht 105.
Figur 2 zeigt ein Bauteil 1, welches einen radartransparenten Körper 3, zum Beispiel einen Kunststoffkörper umfasst und eine einen Halbleiter umfassende Schicht 5 zeigt, sowie zwischen der Schicht 5 und dem Substrat eine Polymerschicht 7 und auf der Schicht 5 eine Polymerschicht 9.
Figur 3 zeigt ein Bauteil 201 mit radartransparentem Körper
   203 bei dem die das Halbleitermaterial umfassende Schicht 205 zwischen einer Polymerschicht 209 und einem Wechselschichtsystem 207 eingebettet ist. Das Wechselschichtsystem ist als Interferenzschichtsystem ausgebildet. Der Fachmann kann die handelsüblichen Dünnfilmdesignprogramme wie zum Beispiel OptiLayer anwenden um die gewünschte optische Funktion zu erzielen. Insbesondere kann die Halbleiterschicht beliebig positioniert werden oder auch in mehrere dünnere Schichten aufgeteilt werden.

Gemäss einer ersten Ausführungsform der vorliegenden Erfindung wird eine 35nm dicke (d.h. im Dickenbereich von 10nm bis 100nm liegende) Siliziumschicht als Halbleiterschicht auf ein schwarzes Kunststoffsubstrat aufgebracht. Um eventuelle Oberflächenstrukturen zu glätten wird auf die Kunststoffoberfläche zunächst ein Primer (UV Acryl-Lack) aufgebracht. Nach dem Aufbringen der Si-Schicht mittels Magnetronzerstäuben wird im vorliegenden Beispiel eine Deckschicht (UV Acryl-Lack) zum zusätzlichen Schutz der dünnen Si-Schicht aufgebracht. Es resultiert eine bläulich bis gelblich metallisch schimmernde Oberfläche. Die Radartransparenz bei 76-77GHz des erfindungsgemäss beschichteten Substrates ist nicht wesentlich geringer als diejenige des vergleichbaren unbeschichteten Substrates.

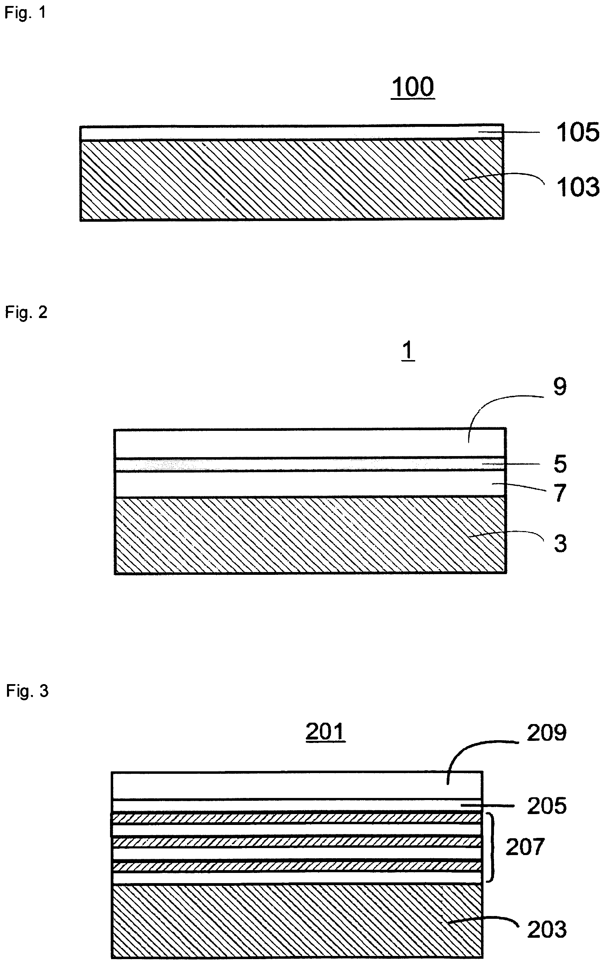

Eine der ersten Ausführungsform entsprechende schematische Darstellung ist in Figur2 gezeigt.

Gemäss einer zweiten Ausführungsform wird die Halbleiterschicht als Schichtsystem, vorzugsweise als Interferenzschichtsystem ausgeführt. Dies kann zum Beispiel als Wechselschichtsystem mit einem Halbleiter, z.B. Si und einem Dielektrikum z.B. SiO₂ aufgebaut werden. Die Gesamtdicke der Si- Schichten sollte dabei wiederum im Bereich zwischen 10nm und 100nm liegen. Um die gewünschte Transmissions- und Reflexionscharakteristik im sichtbaren Bereich des Spektrums elektromagnetischer Strahlen zu erhalten, stehen heute dem Fachmann leistungsstarke Optimierungsprogramme für optische Dünnfilme zur Verfügung. Auf eine tiefergehende diesbezügliche Ausführung wird daher vorliegend verzichtet.

Gemäss einer dritten Ausführungsform wird für die Beschichtung als Halbleitermaterial Germanium verwendet. Auch diese Beschichtung kann als einzelne dünne Monolayer mit einer Dicke 10nm bis 100nm oder als Wechselschichtsystem mit einem oder mehreren Dielektrika, wie zum Beispiel SiO₂ ausgeführt sein. Insbesondere kann Ge auch mit Si kombiniert werden, um die gewünschten Effekte zu erzielen.

Im Rahmen dieser Beschreibung wurde ein radartransparentes Bauteil offenbart welches einen radartransparenten Körper, vorzugsweise einen Kunststoffkörper umfasst, wobei zumindest Teile der Oberfläche eine zumindest einen Halbleiter umfassende Schicht aufweisst, deren Dicke zwischen 10nm und 100nm liegt.

Die zumindest einen Halbleiter umfassende Schicht kann Silizium umfassen, vorzugsweise Silizium als Hauptbestandteil umfassen und besonders bevorzugt im Wesentlichen aus Silizium bestehen.

Die zumindest einen Halbleiter umfassende Schicht kann Bestandteil eines zumindest eine weitere Schicht umfassendes Schichtsystems sein, welches vorzugsweise ein Interferenzschichtsystems ist.

Die zumindest eine weitere Schicht kann SiO₂ sein.

Das Schichtsystem ein Wechselschichtsystem ein.

Zwischen dem Kunststoffkörper und der zumindest einen Halbleiter umfassenden Schicht kann eine Zwischenschicht vorgesehen sein die eine Polymerschicht umfasst, welche vorzugsweise aus einem UV-gehärteten Lack besteht.

Am radartransparenten Bauteil kann eine als gegen die Umgebung abschliessende Schicht eine Polymerschicht vorgesehen sein, welche vorzugsweise aus einem UV- gehärteten Lack besteht.

Das radartransparente Bauteil kann Teil eines Verkleidungsteiles sein, wobei dieses Verkleidungsteil vorzugsweise ein Kfz-Verkleidungsteil ist

Es wird ein Kraftfahrzeug mit Radargerät offenbart, wobei im Strahlengang des Radargerätes ein radartransparentes Bauteil entsprechend den oben geschilderten Möglichkeiten vorgesehen ist und dieses Bauteil vorzugsweise zumindest Teil eines Verkleidungsteils ist.

Es wird ein Verfahren zur Herstellung eines radartransparenten Bauteils offenbart mit den Schritten:
- Bereitstellen eines schwarzen Kunststoffkörpers
- Beschichten des radartransparenten schwarzen Kunststofkörpers mit einer Polymerschicht 7, welche aus einem UV härtendem oberflächenstrukturen glätttenden Acryl Lack besteht und anschliessend
- Beschichten des Kunststoffkörpers mit einer ein im Wesentlichen Silizium beinhaltenden Schicht 5 deren Schichtdicke zwischen 10nm und 100nm liegt, wobei das Beschichten mittels eines Magnetronzerstäubungsverfahrens_erreicht wird_und anschliessend
- Beschichten des radartransparenten Körpers mit einer gegen die Umgebung abschliessenden Polymerschicht 9, welche aus einem UV härtendem Acryl Lack besteht.

Vorzugsweise ist der Vakuumprozess ein PVD und/oder ein CVD-Prozess.

## Patentansprüche

1. Radartransparentes Bauteil (1) welches einen radartransparenten Kunststoffkörper (3) umfasst, wobei zumindest Teile der Oberfläche eine magnetronzerstäubte im Wesentlichen Silizium beinhaltende Schicht (5) aufweisen, der radartransparente Kunststoffkörper aus einem schwarzen Kunststoff besteht,
die Dicke der magnetronzerstäubten im Wesentlichen Silizium beinhaltenden Schicht (5) zwischen 10 und 100 nm liegt,
und zwischen radartransparentem Kunststoffkörper und der einen magnetronzerstäubten im Wesentlichen Silizium beinhaltenden Schicht (5) eine Zwischenschicht (7) aufgebracht ist die eine Polymerschicht umfasst, welche aus einem UV-gehärteten oberflächenstrukturen glättenden Acryl Lack besteht,
und auf der einen magnetronzerstäubten im Wesentlichen Silizium beinhaltenden Schicht (5) eine gegen die Umgebung abschliessende Polymerschicht (9) aufgebracht ist, welche aus einem UV-gehärteten Acryl Lack besteht.

2. Verkleidungsteil mit einem radartransparenten Bauteil entsprechend Anspruch 1, wobei dieses Verkleidungsteil vorzugsweise ein Kfz-Verkleidungsteil ist

3. Kraftfahrzeug mit Radargerät **dadurch gekennzeichnet, dass** im Strahlengang des Radargerätes ein radartransparentes Bauteil Anspruch 1 vorgesehen ist und dieses Bauteil vorzugsweise Teil eines Verkleidungsteils ist.

4. Verfahren zur Herstellung eines radartransparenten Bauteils mit den Schritten:
- Bereitstellen eines radartransparenten schwarzen Kunststoffkörpers (3),
- Beschichten des radartransparenten schwarzen Kunststoffkörpers mit einer Polymerschicht (7), welche aus einem UV härtendem oberflächenstrukturen glättenden Acryl Lack besteht und anschliessend,
- Beschichten des radartransparenten Körpers mit einer im Wesentlichen Silizium beinhaltenden Schicht (5) deren Schichtdicke zwischen 10 und 100 nm liegt, wobei das Beschichten mittels Magnetronzerstäubens erreicht wird und anschliessend
- Beschichten des radartransparenten schwarzen Kunststoffkörpers mit einer gegen die Umgebung abschliessenden Polymerschicht (9), welche aus einem UV härtendem Acryl Lack besteht.

## Claims

1. Radar-transparent component (1) comprising a radar-transparent plastic body (3), wherein at least parts of the surface have a magnetron sputtered layer (5) comprising essentially silicon, the radar-transparent plastic body consists of a black plastic, the thickness of the magnetron sputtered layer (5) comprising essentially silicon is between 10 and 100 nm,
and between the radar-transparent plastic body and the one magnetron sputtered layer (5) comprising essentially silicon an intermediary layer (7) is applied onto that comprises a polymer layer consisting of a UV-hardened acrylic lacquer which smoothes surface structures,
and a polymer layer (9) sealing against the environment is applied on the one magnetron sputtered layer (5) comprising essentially silicon, which polymer layer consists of a UV-hardened acrylic lacquer.

2. Cladding element with a radar-transparent component according to claim 1, wherein this cladding element is preferably a cladding element for a motor vehicle.

3. Motor vehicle with a radar device, **characterized in that** a radar-transparent component according to claim 1 is provided in the ray path of the radar device and this component is preferably part of a cladding element.

4. Method for producing a radar-transparent component, having the steps of:
- providing a radar-transparent black plastic body (3),
- coating the radar-transparent black plastic body with a polymer layer (7) that consists of a UV-hardened acrylic lacquer which smoothes surface structures, and afterwards
- coating the radar-transparent body with a layer (5) comprising essentially silicon whose thickness is between 10 and 100 nm, wherein the coating is achieved by means of magnetron sputtering and afterwards
- coating the radar-transparent black plastic body with a polymer layer (9) which seals against the environment and consists of a UV-hardening acrylic lacquer.

## Revendications

1. Composant transparent au radar (1) qui comprend un corps en matière plastique (3) transparent au radar, du moins des parties de la surface ayant une couche pulvérisée par magnétron et contenant essentiellement du silicium (5), le corps en matière plastique transparent au radar consistant d'un plastique noir, l'épaisseur de la couche pulvérisée par magnétron et contenant essentiellement du silicium (5) étant entre 10 et 100 nm,
et entre le corps en matière plastique transparent au radar et l'une couche pulvérisée par magnétron et contenant essentiellement du silicium (5) une couche intermédiaire (7) est appliquée, qui comprend une couche polymère qui consiste d'un vernis acrylique durci aux UV et aplanissant la structure de la surface,
et sur l'une couche pulvérisée par magnétron et contenant essentiellement du silicium (5) une couche polymère (9) est appliquée qui se ferme par rapport à l'environnement et qui consiste d'un vernis acrylique durci aux UV.

2. Pièce d'habillage avec un composant transparent au radar selon la revendication 1, cette pièce d'habillage étant de préférence une pièce d'habillage pour un véhicule.

3. Véhicule avec un appareil radar, **caractérisé par le fait qu'**un composant transparent au radar selon la revendication 1 est prévu dans le trajet du rayonnement de l'appareil radar et de préférence ce composant fait partie d'une pièce d'habillage.

4. Procédé de fabrication d'un composant transparent au radar suivant les étapes:
- mettre à disposition un corps noir en matière plastique (3) transparent au radar,
- revêtir le corps noir en matière plastique transparent au radar d'une couche polymère (7) qui consiste d'un vernis acrylique durci aux UV et aplanissant la structure de la surface et ensuite,
- revêtir le corps transparent au radar d'une couche contenant essentiellement du silicium (5) dont l'épaisseur est entre 10 et 100 nm, le revêtement étant attaint au moyen de pulvérisation par magnétron et ensuite,
- revêtir le corps noir en matière plastique transparent au radar d'une couche polymère (9) qui se ferme par rapport à l'environnement et qui consiste d'un vernis acrylique durci aux UV.
